# EUROPEAN PATENT APPLICATION

(11) **EP 3 117 703 A1**
(43) Date of publication of application: **18.01.2017**
(21) Application number: 16159724.0
(22) Date of filing: 10.03.2016
(51) Int. Cl.: A01K 15/02

(54) **ELECTRONIC PET CONTAINMENT SYSTEM**

(30) Priority: 14.07.2015 US 201514799505
(71) Applicant: Leavenworth, Laura Lee, White Lake, Michigan 48383 (US); Robbins, Jonathan, White Lake, Michigan 48383 (US)
(72) Inventor: Leavenworth, Laura Lee, White Lake, Michigan 48383 (US); Robbins, Jonathan, White Lake, Michigan 48383 (US)
(74) Representative: Romano, Giuseppe

(57) **Abstract**

A method of using radio frequency identification (RFID), in is described, which keeps pets from accessing household objects. The pet wears a device on neck (5) which is preferably powered by the animal's own activity, converted to electrical power by a motion harvesting system to recharge a battery or standard lithium battery. Because the RFID (4) tags are individually identifiable, the forbidden area alarm can be configured to the pet, allowing use in a multiple-pet household.

## Description

### FIELD OF THE INVENTION

The invention pertains to the field of animal training to keep them away from house objects or others. More particularly, the invention pertains to animals to remain in or avoid a selected area using wireless alarm devices.

### BACKGROUND OF THE INVENTION

Animal stewards often want to confine animals to a particular area without having to erect physical barriers, such as GATES or fences. Reasons for controlling animal movement range from protecting furniture to safety concerns, such as protecting the animal from unauthorized entrance/exit or accessing cupboards where harmful domestic cleaning products may be stored or harming themselves on dangerous objects.

Heretofore, omnidirectional wireless radio transmitters have been set out in regions to be protected from grazing by animals. The animal wore battery powered radio receivers attached to their ears or worn as a collar around their necks. Audio and electric stimuli were administered to the animal in response to receiving a signal exceeding a certain threshold level.

Pet confinement systems often include a radio frequency transmitter having a wire loop for transmitting the radio frequency signal. The wire loop antenna roughly defines the boundary in which the animal is to be confined. The animal wears a receiving unit that is attached to its collar. If the animal gets within a predetermined distance of the wire loop antenna, the receiver unit detects the radio frequency signal transmitted from the loop antenna, whereupon a correcting stimulus such as an electrical shock is applied to the animal. A problem is that it is difficult and time consuming to lay the ground loop antenna. If a discontinuity in the wire loop antenna occurs, it is then necessary to locate and repair the discontinuity. Furthermore, once the wire loop antenna is laid into the ground, the boundaries of the animal's confinement area are fixed, and cannot be easily modified.

It is also known to use a wireless system to track a target, e.g., an article, animal or person. One such wireless system transmits an ultrasound signal to a receiver unit carried by the animal. In response to receiving the ultrasound signal, the receiver unit transmits a radio frequency signal back to the transmitter of the ultrasound signal. Since the speed of sound is known, and radio frequency signals travel practically instantaneously at the speed of light, the transmitting unit can calculate how far away from the transmitter the receiving unit is located based upon the time interval between transmitting the ultrasound signal and receiving the radio frequency signal. If that time interval exceeds a predetermined threshold, indicating that the receiving unit is further than a threshold distance away from the transmitting unit, a second radio frequency signal is transmitted from the transmitting unit to the receiving unit. Upon receiving the second radio frequency signal, the receiving unit applies a correcting stimulus to the animal.

U.S. Patent No. 4,898,120 to Brose sets forth a more sophisticated system in which the parameters of an area in which an animal are to be restrained are determined by evaluating a signal received by a central receiver sent from a transmitter on the animal. This central unit may then transmit a signal to a device worn by the animal to generate a warning shock, sound, visual or the like. However, a new method of implementing an RFID reader has recently been described in GB0525622.7, GB0525624.3, and GB0611243.7. This new method among other things allows the use of a high efficiency antenna, whilst maintaining sufficient communication bandwidth to determine the identification number of the RFID tag. This is in contrast to a standard reader where the antenna efficiency is inversely related to the communication bandwidth and hence the efficiency has an upper limit.

It would be desirable to provide a system using wireless transmitters that is readily portable, if desired, and more approximate results would obtained by ordinary wire fencing.

### SUMMARY OF THE INVENTION

The present invention provides a wireless animal confinement method and system which solves one or more the listed shortcomings of the prior methods and systems.

A method of using radio frequency identification (RFID) is described, which keeps pets from accessing forbidden areas. The pet wears a device on collar which is preferably powered by the animal's own activity, converted to electrical power by a motion harvesting system to recharge a battery or rechargeable lithium battery or the like.

The device uses an RFID reader to detect and identify sensors placed at the areas to which the pet is forbidden to enter, and warns the pet through an alarm device if it is approaching such an area. Because the RFID tags are individually identifiable, the forbidden area can be configured to the pet, allowing use in a multiple-pet household. Multiple sensors could be configured to be used as a 'playpen' type enclosure.

The device of this invention includes a Radio transmitter sensors and radio receiver and a control box. The control box will set correction strength and warning distances as well as detect low batteries and zones. The sensors would be compact as possible as can be fit in doorways and windows etc.

Other features and advantages of the present invention will become more apparent from the following detailed description, taken in conjunction with the accompanying drawings which illustrate, by way of example, the principles of the invention.

### BRIEF DESCRIPTION OF THE DRAWINGS

To further clarify various aspects of some example embodiments of the present invention, a more particular description of the invention will be rendered by reference to specific embodiments thereof which are illustrated in the appended drawing. It is appreciated that the drawing depicts only illustrated embodiments of the invention and are therefore not to be considered limiting of its scope. The invention will be described and explained with additional specificity and detail through the use of the accompanying drawing in which:

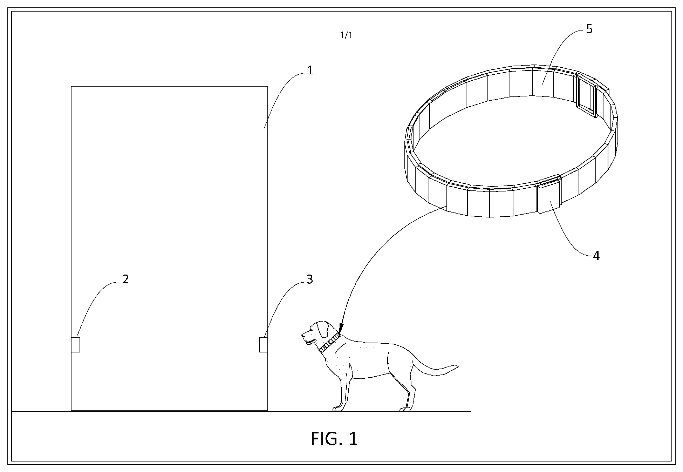

FIG. 1 is a perspective view of one embodiment of the wireless animal confinement system of the present invention;

### DETAIL DESCRIPTION OF THE INVENTION

The following detailed description refers to the accompanying drawings that illustrate the embodiments of the present invention. Other embodiments are possible and modifications may be made to the embodiments without departing from the spirit and scope of the invention.

Therefore, the following detailed description is not meant to limit the invention. Rather the scope of the invention is defined by the appended claims.

With a wireless pet containment system, a transmitter creates an adjustable circular field. If animal travels outside the boundary of that field, he receives stimulation, teaching him to stay inside the field. Pet containment systems are known for maintaining a dog or other animal within a defined area or to keep the animal outside of a defined area. Such a system includes a buried antenna wire which defines a perimeter or boundary across which the dog or other pet is trained to not cross.

The device provided the wireless pet containment system generating an electromagnetic field defining a containment boundary for confining a pet wearing a stimulus module collar that is responsive to the electromagnetic field. While the system is described herein as it would be used in a house, it will be understood that the system can be used both indoors and outdoors. The RFID tag is usually made of several lightest and most durable materials, within which the components are embedded or encapsulated.

The disclosed invention further includes a control box having radio transmitter and radio receiver, a collar fix with RFID tag, an alarm device and a small lithium battery.

Next provided that the device uses an RFID reader to detect and identify sensors placed at the areas to which the pet is forbidden to enter, and warns the pet through an alarm device if it is approaching such an area. Because the RFID tags are individually identifiable, the forbidden area can be configured to the pet, allowing use in a multiple-pet household.

Referring now to the drawings and particularly to **Fig. 1**, a wireless pet confinement system of the present invention includes a control box **1** having radio transmitter **2** and radio receiver **3** fixed inside of the control box. The RFID tag **4** is fixed with collar **5** on animal neck. When RFID reader detects the sensors placed at the areas to which the pet is forbidden to enter, the collar gets triggered and warns the pet through a store like alarm if it is approaching such an area.

It is to be understood that the above description is intended to be illustrative, and not restrictive. For example, the above-discussed embodiments may be used in combination with each other. Many other embodiments will be apparent to those of skill in the art upon reviewing the above description. It is to be understood that the above description is intended to be illustrative, and not restrictive. For example, the above-discussed embodiments may be used in combination with each other. Many other embodiments will be apparent to those of skill in the art upon reviewing the above description.

Plural instances may be provided for components, operations or structures described herein as a single instance. Finally, boundaries between various components are somewhat arbitrary, and particular operations are illustrated in the context of specific illustrative configurations. Other allocations of functionality are envisioned and may fall within the scope of the inventive subject matter. In general, structures and functionality presented as separate components in the exemplary configurations may be implemented as a combined structure or component. Similarly, structures and functionality presented as a single component may be implemented as separate components. These and other variations, modifications, additions, and improvements may fall within the scope of the inventive subject matter.

## Claims

1. An electronic pet containment system for selectively providing access to a site within a control area, the system comprising:
a control box;
a collar;
an RFID tag;
sensors (one with radio receiver other with transmitter
an alarm coupled to an output of A Sensor;
a lithium battery.

2. The electronic pet containment system as in claim 1, wherein said the control box comprises a radio transmitter and/or a radio receiver.

3. The electronic pet containment system as in claim 1, wherein said sensor having transmitter.

4. The electronic pet containment system as in claim 1, wherein said sensor having receiver.

5. The electronic pet containment system as in claim 1, wherein said collar is secured on animal's neck.

6. The electronic pet containment system as in claim 1, wherein said the RFID tag is attached to the collar.

7. The electronic pet containment system as in claim 1, wherein said lithium battery supplying electrical power at least to the control box, said Sensors, the RFID reader and the alarm.

8. The electronic pet containment system as in claim 1, wherein dimension of said control box is 4 × 6 inch.

9. The electronic pet containment system as in claim 1, wherein said control box is used for turning on/off zones, adjusting volume, visual, warning distances, stimulating or lowing batteries in sensors or collar.
The electronic pet containment system as in claim 1, wherein said sensors having built in radio transmitter, receivers , well as visual, alarm, and warning distances.

10. The electronic pet containment system as in claim 1, wherein dimension of said control box vary based on the size necessary to house components.

11. A method of applying at least one of a stimulus and a warning signal to an animal, said method comprising the steps of:
selecting a distance value between the animal and a transmitter;
transmitting a radio frequency signal from said transmitter at a first point in time; and
receiving, at a time substantially equal to said first point in time, said radio frequency signal with a receiver attached to the animal.
